# EUROPEAN PATENT APPLICATION

(11) **EP 4 544 954 A2**
(43) Date of publication of application: **30.04.2025**
(21) Application number: 24207148.8
(22) Date of filing: 17.10.2024
(51) Int. Cl.: A45F 5/00, A45F 5/02

(54) **COUPLING ASSEMBLY**

(30) Priority: 23.10.2023 GB 202316203
(71) Applicant: NLG Global Limited, Dorset Poole BH16 6NN (GB)
(72) Inventor: ARIS, Reuben, Dorset (GB); ARIS, Craig, Dorset (GB)
(74) Representative: Sugden, Mark William

(57) **Abstract**

Aspects of the disclosure relate to a coupling assembly 1000 for connecting a tool to a strap/lanyard. The coupling assembly comprises: a male connector 100 comprising a shaft 102 which extends longitudinally from a first end 104 to a second end 106; a female connector 10 comprising a connector body 12 which defines a longitudinal passage for receiving the shaft of the male connector; an engaging member 40 which is movable between an engaged state in which the engaging member is configured to inhibit disconnection of the male and female connectors, and a disengaged state in which disconnection of the male and female connectors is permitted; and a blocking member 60 which is movable between a first position in which the blocking member is configured to inhibit actuation of the engaging member, and a second position in which actuation of the engaging member is permitted.

## Description

### FIELD

The present disclosure relates to a coupling assembly, to a female connector for a coupling assembly, to a male connector for a coupling assembly, and to a kit of parts.

### BACKGROUND

Construction workers face numerous hazards when working on a construction site. One of the most common causes of injury on construction sites is falling objects, i.e. when an object (e.g. a dropped tool, debris, building material, etc.) falls, potentially causing injury to a construction worker and/or an object below. To increase the safety of the construction site it is known to tether a tool to an anchor point on a person or object, to reduce the risk of the tool from falling.

In one known arrangement, a strap or lanyard is connected to an anchor point (e.g., on a belt fastened to a person) at a first end of the strap or lanyard. The other end of the strap or lanyard has a carabiner which can be secured to a tether point on a tool (e.g., a loop through which the carabiner can be hooked).

The present invention seeks to overcome, or at least mitigate, one or more problems of the prior art.

### SUMMARY

An aspect of the teachings provides a coupling assembly for connecting a tool to a strap or lanyard, the coupling assembly comprising a male connector and a female connector.

Optionally, the male connector comprises a shaft which extends longitudinally from a first end to a second end.

Optionally, the female connector comprises a connector body which defines a longitudinal passage for receiving the shaft of the male connector.

Optionally, the coupling assembly comprises an engaging member which is movable between an engaged state in which the engaging member is configured to inhibit disconnection of the male and female connectors, and a disengaged state in which disconnection of the male and female connectors is permitted.

Such a coupling assembly provides a secure means of coupling a tool to a strap/lanyard (e.g., by coupling one of the tool or strap/lanyard to the male connector and the other of the tool or strap/lanyard to the female connector). In addition, having a male connector with a shaft and a female connector with a longitudinal passage may facilitate easier disconnection of the male and female connectors (e.g., by pulling them apart in a longitudinal direction) compared to alternative coupling means such as carabiners.

Optionally, the coupling assembly comprises a blocking member which is movable between a first position in which the blocking member is configured to inhibit actuation of the engaging member, and a second position in which actuation of the engaging member is permitted.

By having such a blocking member, accidental disconnection of the male connector from the female connector can be inhibited by moving the blocking member to the first position.

Optionally, the engaging member and/or blocking member are part of the female connector.

In this way, the female connector comprises all of the moving parts of the coupling assembly, which allows a simplified male connector (e.g., just comprising the shaft). This may lead to a reduced cost of the male connector, which allows multiple male connectors to be attached to multiple tools (e.g., by being integrally formed, tethered thereto, and/or fastened via a loop or other means), whilst having a single female connector with the moving parts.

Optionally, the engaging member is manually movable from the engaged state to the disengaged state, wherein the blocking member covers the engaging member in the first position to inhibit actuation of the engaging member and does not cover the engaging member in the second position to permit actuation of the engaging member.

This provides a simple means for selectively inhibiting/permitting actuation of the engaging member.

Optionally, the blocking member is biased towards the first position. Optionally, the coupling assembly comprises a torsion spring or a compression spring configured to bias the blocking member towards the first position.

Such a biasing of the blocking member decreases the chances of accidental disconnection of the male connector from the female connector. In other words, the default state of the blocking member is the first position, and a user has to actively move the blocking member to the second position if they want to disconnect the male and female connectors.

Optionally, the blocking member is rotatable between the first and second positions.

Rotating between the first and second positions provides a simple means of controlling movement of the blocking member, which may be more compact than alternatives (such as moving the blocking member longitudinally).

Furthermore, the blocking member may be more susceptible to longitudinal forces during use than to rotational forces (e.g., if the coupling assembly becomes trapped between a structure and the body of a user). Therefore, the blocking member being rotational may further inhibit accidental disconnection of the male and female connectors.

Optionally, the blocking member comprises a sleeve which at least partly surrounds the connector body and which is rotatable between the first and second positions, and wherein the sleeve comprises a recess which is shaped to provide access to the engaging member when the blocking member is in the second position.

Such an arrangement may provide a simple means of rotationally moving the blocking member between the first and second positions.

In alternative embodiments, the blocking member may be configured to move in a longitudinal direction to transition between the first and second positions. In such embodiments, the blocking member may comprise a sleeve which at least partly surrounds the connector body and which is movable in the longitudinal direction to transition between the first and second positions.

Optionally, the blocking member is manually movable to the second position. Optionally, the blocking member is configured to be manually pushed (e.g., in a rotational direction) to transition from the first position to the second position.

In other words, no designated tool, such as a key, is required for moving the blocking member to the second position. Manually pushing the blocking member may provide a simple means of actuation which can be accomplished easily with one or more hands (e.g., by gripping the coupling assembly and pushing the blocking member with one or more digits).

Optionally, the engaging member is manually movable to the disengaged state. Optionally, the engaging member is configured to be manually pushed (e.g., in a transverse direction) to transition from the engaged to the disengaged state.

In other words, no designated tool, such as a key, is required for moving the engaging member to the disengaged state. Manually pushing the engaging member may provide a simple means of actuation which can be accomplished easily with one or more hands (e.g., by gripping the coupling assembly and pushing the engaging member with one or more digits).

Optionally, the coupling assembly is configured and arranged so that the blocking member can be moved to the second position and the engaging member can be moved to the disengaged state with a single human hand.

This may facilitate supporting a tool coupled by the coupling assembly with one hand and disconnecting the coupling assembly with the other hand (e.g., when putting the tool away for storage). This may increase safety over arrangements where two hands are needed to disconnect the coupling assembly, which may be more likely to lead to dropped tools.

Optionally, the blocking member comprises an abutment surface which can be pushed to move the blocking member from the first position to the second position, and wherein the abutment surface is positioned adjacent to the engaging member when the blocking member is in the second position, such that a first part (e.g., an edge) of a human thumb can be used to push the abutment surface to move the blocked member to the second position and a different part (e.g., an underside) of the same thumb can then be used to push the engaging member to the disengaged state.

Such an arrangement may provide a simple means of disconnecting the male and female connectors with a single hand. For example, a user may grip the coupling assembly with their fingers and then use their thumb to disconnect the male and female connectors.

Optionally, the blocking member comprises an outer surface, wherein the abutment surface projects from the outer surface.

The abutment surface projecting from the outer surface may increase the contact area for a thumb, which may make it easier to move the blocking member to the second position.

Optionally, the blocking member comprises an outer surface, wherein the outer surface comprises one or more gripping formations. Optionally, the outer surface comprises a plurality of gripping formations spaced about around a circumference of the outer surface. Optionally, the one or more gripping formations comprise one or more recesses and/or projections in the outer surface. Optionally, the one or more recesses and/or projections extend substantially longitudinally or circumferentially.

Such one or more gripping formations may facilitate moving (e.g., rotating) and/or resisting movement (e.g., resisting rotation) of the blocking member. For example, after pushing the abutment surface of the blocking member with a thumb to transition to the second position, fingers of the same hand may engage the one or more gripping formations to resist movement of the blocking member back to the first position, while the thumb is used to push the engaging member to the disengaged state.

Optionally, the coupling arrangement comprises a locking member configured to selectively inhibit or permit movement of the blocking member. Optionally, the locking member comprises a slidable pin which is configured to be received in a corresponding recess on the blocking member to inhibit movement of the blocking member, and to be removed from said corresponding recess to permit movement of the blocking member. Optionally, the locking member is part of the female connector.

It will be understood that such a coupling arrangement may require three separate actions to disengage the male and female connectors. In particular, the locking member may be actuated to permit movement of the blocking member, the blocking member may then be moved to the second position, and the engaging member may then be moved to the disengaged state. This may further reduce the likelihood of accidental disconnection of the male and female connectors.

Optionally, the engaging member is biased towards the engaged state.

The engaging member being biased towards the engaged state removes the need for a user to actively move the engaging member to the engaged state. In other words, unless the engaging member is urged against the biasing force to the disengaged state, the engaging member will remain in the engaged state and the male and female connectors will remain connected. Furthermore, this biasing may reduce the likelihood of accidentally moving the engaging member to the disengaged state, because small accidental forces acting on the engaging member would be countered by the biasing force.

Optionally, the coupling assembly comprises a compression spring or a torsion spring configured to bias the engaging member towards the engaged state.

A compression spring or torsion spring provides a simple means of biasing the engaging member.

Optionally, the engaging member is configured to move in a transverse direction relative to the male and/or female connectors to transition between the engaged and disengaged states.

This may facilitate pushing of the engaging member to change its state.

Optionally, the shaft of the male connector comprises an engagement formation between the first and second ends, wherein the engaging member is fixed against longitudinal movement relative to the female connector, wherein the engaging member is configured to engage the engagement formation of the male connector when in the engaged state to inhibit relative longitudinal movement between the male and female connectors.

Such an arrangement may facilitate a secure coupling of the male and female connectors.

Optionally, the engagement formation comprises a groove.

The engagement formation being a groove (e.g., recessed into the shaft) allows a closer fit between the rest of the shaft and the longitudinal passage in comparison to other engagement formations, such as projecting ribs. This may facilitate a more robust coupling between the male and female connectors.

Optionally, the engagement formation comprises an annular formation.

The engagement formation being an annular formation means that the shaft of the male connector can be inserted into the longitudinal passage of the female connector at any rotational orientation. In other words, the shaft does not need to be inserted at a particular rotational orientation to align the engaging member with the engagement formation.

Alternatively, the male connector may comprise an engagement formation which is separate to the shaft and which extends around an outer surface of the female connector. This may also facilitate a secure coupling of the male and female connectors.

Alternatively, the female connector may comprise an engagement formation on an outer surface or within the longitudinal passage, and the engaging member is fixed against longitudinal movement relative to the male connector, wherein the engaging member is configured to engage the engagement formation of the female connector when in the engaged state to inhibit relative longitudinal movement between the male and female connectors. This may also facilitate a secure coupling of the male and female connectors.

Optionally, the engaging member comprises a first side which can be pushed to move the engaging member from the engaged to the disengaged state, and wherein the engaging member comprises a second side opposite to the first side which is configured to engage the engagement formation when the engaging member is in the engaged state.

Such an arrangement allows the engaging member to be easily pushed to transition from the engaged to the disengaged states.

Optionally, the engaging member comprises a ring which extends from the first side to the second side to surround the shaft of the male connector.

Such a ring may provide a robust connection between the first and second sides of the engaging member, whilst permitting the shaft of the male connector to pass through an inside of the ring when in the disengaged state.

Optionally, the engaging member is configured to slide in the transverse direction to transition between the engaged and disengaged states.

Such a sliding movement may allow a closer clearance between the engaging member and the female and/or male connector than would be possible with alternative types of movement (e.g., pivoting movement). This may facilitate a more robust coupling between the male and female connectors.

Alternatively, the engaging member may be attached to the female connector at a pivot so that a portion of the engaging member spaced apart from the pivot moves approximately in the transverse direction.

Optionally, the engaging member is received in one or more transverse apertures through the connector body, and wherein the engaging member slides through the one or more transverse apertures to transition between the engaged and disengaged states.

Such an arrangement may provide a simple means for fixing the engaging member against longitudinal movement of the female connector.

Optionally, the coupling assembly further comprises one or more stop members configured to retain the engaging member in the connector body.

Such one or more stop members may limit movement of the engaging member beyond the engaged and disengaged states. In other words, such one or more stop members may inhibit disconnecting of the engaging member from the connector body.

Optionally, the engaging member is configured to slide in a first direction to transition from the engaged state to the disengaged state, wherein a first stop member is arranged to limit movement of the engaging member in a second direction opposite to the first direction.

Optionally, the engaging member is configured to slide in the second direction to transition from the disengaged state to the engaged state, and wherein a second stop member is arranged to limit movement of the engaging member in the first direction.

Optionally, the first and/or second stop members are configured to engage a portion of the connector body surrounding the one or more transverse apertures to inhibit movement of the engaging member in the second and/or first direction.

Optionally, the first and/or second stop member is a discrete component which is secured to the engaging member. Optionally, the first and/or second stop member is integrally formed with the engaging member.

Optionally, the engaging member comprises an outer surface having a different appearance to an outer surface of the connector body and blocking member. Optionally, the outer surface of the engaging member is a different colour to the outer surface of the connector body and blocking member. Optionally, the outer surface of the engaging member is red and the outer surface of the connector body and blocking member are of a different colour (e.g., a neutral colour such as white or black).

The outer surface of the engaging member having a different appearance (e.g., a different colour) may allow a user of the coupling assembly to visually identify whether the male and female connectors could be disconnected (by actuation of the engaging member). This may help to improve safety in the event that the blocking member is accidentally moved or stuck in the second position, as the user will be visually alerted to this. The outer surface of the engaging member being red may be particularly useful for visually indicating a dangerous state of the coupling assembly, because red is commonly used in construction and industrial settings to signify danger.

Optionally, the coupling assembly further comprises a biasing member inside the longitudinal passage of the connector body, wherein when the shaft of the male connector is received within the longitudinal passage the biasing member is configured to urge an end of the shaft in an outboard direction of the longitudinal passage.

Such a biasing member may facilitate ejection of the shaft of the male connector from the longitudinal passage when the engaging member is moved to the disengaged state. This may facilitate one-handed disconnection of the male and female connectors. In other words, when a user moves the engaging member to the disengaged state, a separate hand is not needed to pull the shaft of the male connector out of the female connector.

Optionally, the biasing member comprises a coil spring.

Optionally, the coupling assembly further comprises a gripping portion arranged adjacent to the blocking member and/or engaging member, such that a user can grip the gripping portion with a lower portion of a hand and move the blocking member and/or engaging member with an upper portion of the same hand.

Such a gripping portion may facilitate single handed disconnection of the coupling assembly, as it allows the coupling assembly to be stabilised to a greater extent than would be possible by gripping a strap or lanyard coupled to the connector body. Such a gripping portion may also provide a surface for adding a safety label, or other insignia.

Optionally, the gripping portion is part of the female connector.

Optionally, the gripping portion is a separate component coupled to the connector body. Alternatively, the gripping portion may be integrally formed with the connector body.

Optionally, the connector body comprises a loop for coupling to a strap or lanyard, wherein the gripping portion comprises a recess such that a strap or lanyard can be passed through the recess and coupled to the loop of the connector body.

In other words, the gripping portion may be a cover for the loop of the connector body. Alternatively, there may be a cover for the loop of the connector body which does not act as a gripping portion (e.g., is not arranged adjacent to the blocking member and/or engaging member). Such a cover may still have a recess such that a strap or lanyard can be passed through the recess and coupled to the loop of the connector body.

Such a gripping portion and/or cover may protect the end of the strap or lanyard, which may increase the robustness of the connection and extend the life of the coupling assembly.

Optionally, the gripping portion is of a flexible and durable material, such as thermoplastic polyamide elastomers (TPA).

This may facilitate effective gripping and/or protection of the end of the strap or lanyard coupled to the connector body.

Optionally, the male connector comprises a loop for receiving a strap or lanyard and/or wherein the female connector comprises a loop for receiving a strap or lanyard.

Such a loop provides a simple means for coupling the male connector and/or female connector to a respective component to be coupled (e.g., a tool or a strap/lanyard). Furthermore, such a loop may provide flexibility for connecting to a range of different components (e.g., tools of different shapes and sizes).

Optionally, the male connector is integrally formed with a body of a tool.

Being integrally formed may provide a robust connection. Furthermore, this may provide a more compact arrangement, since only the shaft of the male connector needs to be added to the body of the tool, rather than any other loops or other components.

Optionally, the female connector is integrally formed with a body of a tool.

Being integrally formed may provide a robust connection. Furthermore, this may provide a more compact arrangement, since only the connector body of the female connector needs to be added to the body of the tool, rather than any other loops or other components.

Optionally, the male connector comprises a tether arrangement for tethering the male connector to a tool.

Such a tether arrangement facilitates coupling the male connector to a variety of different tools. In addition, such a tether arrangement being part of the male connector allows the male connector to be directly coupled to a tool, rather than having to have a separate component (e.g., strap, tape or the like) to couple the male connector to a tool.

Optionally, the female connector comprises a tether arrangement for tethering the female connector to a tool.

Such a tether arrangement facilitates coupling the female connector to a variety of different tools. In addition, such a tether arrangement being part of the female connector allows the female connector to be directly coupled to a tool, rather than having to have a separate component (e.g., strap, tape or the like) to couple the female connector to a tool.

Optionally, the tether arrangement comprises: one or more straps for wrapping around a tool; and one or more sockets for receiving the one or more straps. Optionally, each of the one or more sockets is configured to engage the respective strap as it is inserted into the socket, to inhibit movement of the respective strap out of the socket.

Such one or more straps/sockets provide a simple means for tethering the male and/or female connector to a variety of different tools of different sizes and shapes.

Optionally, the male connector comprises a main body, wherein the one or more straps extend from the main body in a first direction, and wherein the shaft extends from the main body in a second direction perpendicular to the first direction.

Optionally, the one or more sockets each comprise a socket passage for receiving the respective strap and one or more teeth arranged at an angle to the socket passage, wherein the one or more teeth are arranged to permit insertion of the respective strap through the socket passage in a first direction, and to inhibit removal of the strap from the socket passage in a second direction opposite to the first direction.

Such one or more teeth arranged at an angle provide a simple means of securing the respective strap against movement out of the socket.

Optionally, the one or more teeth are of harder material than the one or more straps. Optionally, the one or more teeth are of metallic material (e.g., steel material). Optionally, the one or more straps are of a flexible plastics material (e.g., nylon or other engineered plastic).

The one or more teeth being of harder material than the one or more straps may increase the extent to which the one or more teeth can bite into the respective strap to inhibit movement out of the socket. Metallic material may be particularly suitable for biting into a strap (e.g., a strap made of nylon).

Optionally, the one or more teeth are provided on one or more plates which are arranged at an angle relative to the socket passage. Optionally, the one or more plates are resiliently deflectable. Optionally, the one or more plates are part of an insert which is fitted into a recess in a main body of the male connector. Optionally, the insert is fastened to the main body via one or more fasteners. Optionally, the insert is press-fitted into the recess of the main body. Optionally, the recess of the main body comprises one or more pins and wherein the insert comprises one or more corresponding apertures which are press-fitted with the one or more pins. Optionally, the insert and recess comprise a poka-yoke configuration to ensure correct angling of the one or more teeth relative to the socket passage. Optionally, the poka-yoke configuration is provided by complementary non-symmetrical shapes of the recess and insert.

Such resiliently deflectable plates may facilitate insertion of a strap into the socket (i.e., by deflecting the plate). In such a situation, the resilient nature of the plate will urge the plate back to the original position, which results in the one or more teeth being urged into engagement with the strap, which may provide a more secure coupling.

Optionally, the male connector comprises a main body which comprises a planar surface for abutment against a body of a tool.

Optionally, the shaft of the male connector comprises a tapered free end.

Such a tapered free end may facilitate insertion of the free end into the longitudinal passage of the female connector.

Furthermore, in embodiments where the shaft has a groove to be engaged by an engaging member in the longitudinal passage of the female connector, such a tapered free end may provide a guide surface for pushing the engaging member out of the longitudinal passage to a disengaged state during insertion of the male connector into the longitudinal passage (e.g., of pushing the engaging member against a biasing force urging the engaging member into the longitudinal passage).

Optionally, the connector body and/or engaging member and/or blocking member and/or shaft of the male connector is of plastics material (e.g., such as nylon or other engineered plastic), optionally comprising structural reinforcing material (e.g., such as glass powder and/or glass fibres). Optionally, the connector body and/or engaging member and/or blocking member and/or male connector is of a non-conductive material.

Such material is durable and capable of withstanding conditions on typical work sites on which the coupling assembly may be used.

A further aspect of the teachings provides a female connector for a coupling assembly.

Optionally, the female connector comprises a connector body which defines a longitudinal passage for receiving a shaft of a male connector.

Optionally, the female connector comprises an engaging member which is moveable between an engaged state in which the engaging member is configured to inhibit disconnection of the female connector and a male connector coupled thereto, and a disengaged state in which the engaging member is configured to permit disconnection of the female connector and a male connector coupled thereto.

Such a female connector provides a secure means of coupling to a male connector. In addition, having a female connector with a longitudinal passage for receiving a shaft of a male connector may facilitate easier disconnection of the male and female connectors (e.g., by pulling them apart in a longitudinal direction) compared to alternative coupling means such as carabiners.

Optionally, the female connector comprises a blocking member which is movable between a first position in which the blocking member is configured to inhibit actuation of the engaging member, and a second position in which actuation of the engaging member is permitted.

By having such a blocking member, accidental disconnection of a male connector from the female connector can be inhibited by moving the blocking member to the first position.

Optionally, the engaging member is manually movable from the engaged state to the disengaged state, wherein the blocking member covers the engaging member in the first position to inhibit actuation of the engaging member and does not cover the engaging member in the second position to permit actuation of the engaging member.

Optionally, the blocking member is biased towards the first position. Optionally, the coupling assembly comprises a torsion spring or a compression spring configured to bias the blocking member towards the first position.

Optionally, the blocking member is rotatable between the first and second positions.

Optionally, the blocking member comprises a sleeve which at least partly surrounds the connector body and which is rotatable between the first and second positions, and wherein the sleeve comprises a recess which is shaped to provide access to the engaging member when the blocking member is in the second position.

In alternative embodiments, the blocking member may be configured to move in a longitudinal direction to transition between the first and second positions. In such embodiments, the blocking member may comprise a sleeve which at least partly surrounds the connector body and which is movable in the longitudinal direction to transition between the first and second positions.

Optionally, the blocking member is manually movable to the second position. Optionally, the blocking member is configured to be manually pushed (e.g., in a rotational direction) to transition from the first position to the second position.

Optionally, the engaging member is manually movable to the disengaged state. Optionally, the engaging member is configured to be manually pushed (e.g., in a transverse direction) to transition from the engaged to the disengaged state.

Optionally, the female connector is configured and arranged so that the blocking member can be moved to the second position and the engaging member can be moved to the disengaged state with a single human hand.

Optionally, the blocking member comprises an abutment surface which can be pushed to move the blocking member from the first position to the second position, and wherein the abutment surface is positioned adjacent to the engaging member when the blocking member is in the second position, such that a first part (e.g., an edge) of a human thumb can be used to push the abutment surface to move the blocked member to the second position and a different part (e.g., an underside) of the same thumb can then be used to push the engaging member to the disengaged state.

Optionally, the blocking member comprises an outer surface, wherein the abutment surface projects from the outer surface.

Optionally, the blocking member comprises an outer surface, wherein the outer surface comprises one or more gripping formations. Optionally, the outer surface comprises a plurality of gripping formations spaced about around a circumference of the outer surface. Optionally, the one or more gripping formations comprise one or more recesses and/or projections in the outer surface. Optionally, the one or more recesses and/or projections extend substantially longitudinally or circumferentially.

Optionally, the female connector comprises a locking member configured to selectively inhibit or permit movement of the blocking member. Optionally, the locking member comprises a slidable pin which is configured to be received in a corresponding recess on the blocking member to inhibit movement of the blocking member, and to be removed from said corresponding recess to permit movement of the blocking member.

Optionally, the engaging member is biased towards the engaged state.

Optionally, the female connector comprises a compression spring or a torsion spring configured to bias the engaging member towards the engaged state.

Optionally, the engaging member is configured to move in a transverse direction relative to the connector body to transition between the engaged and disengaged states.

Optionally, the shaft of the male connector comprises an engagement formation between the first and second ends, wherein the engaging member is fixed against longitudinal movement relative to the connector body, wherein the engaging member is configured to engage an engagement formation on a shaft of a male connector when in the engaged state to inhibit relative longitudinal movement between the male and female connectors. Optionally, the engaging member is configured to engage a groove on a shaft of a male connector when in the engaged state to inhibit relative longitudinal movement between the male and female connectors.

Optionally, the engaging member is configured to engage an annular formation on a shaft of a male connector when in the engaged state to inhibit relative longitudinal movement between the male and female connectors.

Optionally, the engaging member comprises a first side which can be pushed to move the engaging member from the engaged to the disengaged state, and wherein the engaging member comprises a second side opposite to the first side which is configured to engage said engagement formation when the engaging member is in the engaged state.

Optionally, the engaging member comprises a ring which extends from the first side to the second side so that the engaging member is configured to surround a shaft of a male connector received in the longitudinal passage.

Optionally, the engaging member is configured to slide in the transverse direction to transition between the engaged and disengaged states.

Alternatively, the engaging member may be attached to the connector body at a pivot so that a portion of the engaging member spaced apart from the pivot moves approximately in the transverse direction.

Optionally, the engaging member is received in one or more transverse apertures through the connector body, and wherein the engaging member slides through the one or more transverse apertures to transition between the engaged and disengaged states.

Optionally, the female connector further comprises one or more stop members configured to retain the engaging member in the connector body.

Optionally, the engaging member is configured to slide in a first direction to transition from the engaged state to the disengaged state, wherein a first stop member is arranged to limit movement of the engaging member in a second direction opposite to the first direction.

Optionally, the engaging member is configured to slide in the second direction to transition from the disengaged state to the engaged state, and wherein a second stop member is arranged to limit movement of the engaging member in the first direction.

Optionally, the first and/or second stop members are configured to engage a portion of the connector body surrounding the one or more transverse apertures to inhibit movement of the engaging member in the second and/or first direction.

Optionally, the first and/or second stop member is a discrete component which is secured to the engaging member. Optionally, the first and/or second stop member is integrally formed with the engaging member.

Optionally, the engaging member comprises an outer surface having a different appearance to an outer surface of the connector body and blocking member. Optionally, the outer surface of the engaging member is a different colour to the outer surface of the connector body and blocking member. Optionally, the outer surface of the engaging member is red and the outer surface of the connector body and blocking member are of a different colour (e.g., a neutral colour such as white or black).

Optionally, the female connector further comprises a biasing member inside the longitudinal passage of the connector body, wherein when a shaft of a male connector is received within the longitudinal passage the biasing member is configured to urge an end of the shaft in an outboard direction of the longitudinal passage.

Optionally, the biasing member comprises a coil spring.

Optionally, the female connector further comprises a gripping portion arranged adjacent to the blocking member and/or engaging member, such that a user can grip the gripping portion with a lower portion of a hand and move the blocking member and/or engaging member with an upper portion of the same hand.

Optionally, the gripping portion is a separate component coupled to the connector body. Alternatively, the gripping portion may be integrally formed with the connector body.

Optionally, the connector body comprises a loop for coupling to a strap or lanyard, wherein the gripping portion comprises a recess such that a strap or lanyard can be passed through the recess and coupled to the loop of the connector body.

Such a gripping portion and/or cover may protect the end of the strap or lanyard, which may increase the robustness of the connection and extend the life of the coupling assembly.

Optionally, the gripping portion is of a flexible and durable material, such as thermoplastic polyamide elastomers (TPA).

Optionally, the female connector comprises a loop for receiving a strap or lanyard.

Optionally, the female connector is integrally formed with a body of a tool.

Optionally, the female connector comprises a tether arrangement for tethering the female connector to a tool.

Optionally, the tether arrangement comprises: one or more straps for wrapping around a tool; and one or more sockets for receiving the one or more straps. Optionally, each of the one or more sockets is configured to engage the respective strap as it is inserted into the socket, to inhibit movement of the respective strap out of the socket.

Optionally, the one or more straps extend from the connector body.

Optionally, the one or more sockets each comprise a socket passage for receiving the respective strap and one or more teeth arranged at an angle to the socket passage, wherein the one or more teeth are arranged to permit insertion of the respective strap through the socket passage in a first direction, and to inhibit removal of the strap from the socket passage in a second direction opposite to the first direction.

Optionally, the one or more teeth are of harder material than the one or more straps. Optionally, the one or more teeth are of metallic material (e.g., steel material). Optionally, the one or more straps are of a flexible plastics material (e.g., nylon or other engineered plastic).

Optionally, the one or more teeth are provided on one or more plates which are arranged at an angle relative to the socket passage. Optionally, the one or more plates are resiliently deflectable. Optionally, the one or more plates are part of an insert which is fitted into a recess in the connector body. Optionally, the insert is fastened to the connector body via one or more fasteners. Optionally, the insert is press-fitted into the recess of the connector body. Optionally, the recess of the connector body comprises one or more pins and wherein the insert comprises one or more corresponding apertures which are press-fitted with the one or more pins. Optionally, the insert and recess comprise a poka-yoke configuration to ensure correct angling of the one or more teeth relative to the socket passage. Optionally, the poka-yoke configuration is provided by complementary non-symmetrical shapes of the recess and insert.

Optionally, the connector body comprises a planar surface for abutment against a body of a tool.

Optionally, the connector body and/or engaging member and/or blocking member is of plastics material (e.g., such as nylon or other engineered plastic), optionally comprising structural reinforcing material (e.g., such as glass powder and/or glass fibres). Optionally, the connector body and/or engaging member and/or blocking member is of a non-conductive material.

A further aspect of the teachings provides a male connector for a coupling assembly.

Optionally, the male connector comprises a shaft which extends longitudinally from a first end to a second end.

Optionally, the male connector comprises a loop for receiving a strap or lanyard.

Such a loop provides a simple means for coupling the male connector to a respective component to be coupled (e.g., a tool or a strap/lanyard). Furthermore, such a loop may provide flexibility for connecting to a range of different components (e.g., tools of different shapes and sizes).

Optionally, the male connector is integrally formed with a body of a tool.

Being integrally formed may provide a robust connection. Furthermore, this may provide a more compact arrangement, since only the shaft of the male connector needs to be added to the body of the tool, rather than any other loops or other components.

Optionally, the male connector comprises a tether arrangement for tethering the male connector to a tool.

Such a tether arrangement facilitates coupling the male connector to a variety of different tools. In addition, such a tether arrangement being part of the male connector allows the male connector to be directly coupled to a tool, rather than having to have a separate component (e.g., strap, tape or the like) to couple the male connector to a tool.

Optionally, the tether arrangement comprises: one or more straps for wrapping around a tool; and one or more sockets for receiving the one or more straps. Each of the one or more sockets may be configured to engage the respective strap as it is inserted into the socket, to inhibit movement of the respective strap out of the socket.

Such one or more straps/sockets provide a simple means for tethering the male connector to a variety of different tools of different sizes and shapes.

Optionally, the male connector comprises a main body, wherein the one or more straps extend from the main body in a first direction, and wherein the shaft extends from the main body in a second direction perpendicular to the first direction.

Optionally, the one or more sockets each comprise a socket passage for receiving the respective strap and one or more teeth arranged at an angle to the socket passage, wherein the one or more teeth are arranged to permit insertion of the respective strap through the socket passage in a first direction, and to inhibit removal of the strap from the socket passage in a second direction opposite to the first direction.

Optionally, the one or more teeth are of harder material than the one or more straps. Optionally, the one or more teeth are of metallic material (e.g., steel material). Optionally, the one or more straps are of a flexible plastics material (e.g., nylon or other engineered plastic).

Optionally, the one or more teeth are provided on one or more plates which are arranged at an angle relative to the socket passage. Optionally, the one or more plates are resiliently deflectable. Optionally, the one or more plates are part of an insert which is fitted into a recess in a main body of the male connector. Optionally, the insert is fastened to the main body via one or more fasteners. Optionally, the insert is press-fitted into the recess of the main body. Optionally, the recess of the main body comprises one or more pins and wherein the insert comprises one or more corresponding apertures which are press-fitted with the one or more pins. Optionally, the insert and recess comprise a poka-yoke configuration to ensure correct angling of the one or more teeth relative to the socket passage. Optionally, the poka-yoke configuration is provided by complementary non-symmetrical shapes of the recess and insert.

Optionally, the male connector comprises a main body which comprises a planar surface for abutment against a body of a tool.

Optionally, the shaft of the male connector comprises a tapered free end.

Optionally, the shaft and/or main body of the male connector is of plastics material (e.g., such as nylon or other engineered plastic), optionally comprising structural reinforcing material (e.g., such as glass powder and/or glass fibres). Optionally, the shaft and/or main body of the male connector is of a non-conductive material.

A further aspect of the teachings provides a kit of parts comprising a coupling assembly as disclosed herein, and/or a female connector as disclosed herein, and/or a male connector as disclosed herein. The kit of parts further comprises a strap or lanyard comprising a first end for coupling to the male or female connector, and a second end for coupling to an anchor point.

Such a kit of parts benefits from the advantages of the coupling assembly and/or male connector and/or female connector outlined above. In addition, having such a strap or lanyard provides a means of securing the coupling assembly to an anchor point to inhibit dropping of a tool coupled to male or female connector.

It will be appreciated that the optional features disclosed herein may be combined with any aspect of the teachings. All combinations are not recited herein for the sake of brevity. For example, any optional feature of the female connector of the coupling assembly of the first aspect of the teachings may be present in the female connector of the second aspect of the teachings, and vice versa. Similarly, any optional feature of the male connector of the coupling assembly of the first aspect of the teachings may be present in the male connector of the third aspect of the teachings, and vice versa.

### BRIEF DESCRIPTION OF THE DRAWINGS

Embodiments will now be described with reference to the accompanying drawings, in which:
Figure 1 is an exploded perspective view of a coupling assembly, according to an embodiment;
Figure 2A is a perspective view of the coupling assembly of Figure 1 in an engaged state in which male and female connectors of the coupling assembly are connected to each other;
Figure 2B is a perspective view of the coupling assembly of Figures 1 and 2A in a disengaged state in which the male and female connectors are disconnected;
Figure 3A is a side cross-sectional view of the coupling assembly of Figures 1 to 2B in the engaged state;
Figure 3B is a side cross-sectional view of the coupling assembly of Figures 1 to 3A in the disengaged state;
Figure 4A is a plan cross-sectional view of the coupling assembly of Figures 1 to 3B in the engaged state;
Figure 4B is a plan cross-sectional view of the coupling assembly of Figures 1 to 4A in the disengaged state;
Figure 5 is an alternative side cross-sectional view of the coupling assembly of Figures 1 to 4B;
Figure 6 is a side view of the male connector of the coupling assembly of Figures 1 to 5 coupled to a tool;
Figure 7 is a side view of a coupling assembly according to an alternative embodiment in a disengaged state in which male and female connectors of the coupling assembly are disconnected from each other;
Figure 8 is a side view of a coupling assembly according to an alternative embodiment in a disengaged state in which male and female connectors of the coupling assembly are disconnected from each other;
Figure 9 is a side view of the male connector of Figure 8;
Figure 10 is a perspective view of an alternative male connector for the coupling assembly of Figure 8;
Figure 11 is a plan view of the male connector of Figure 10;
Figure 12 is a side cross-sectional view of the male connector of Figures 10 and 11, taken along plane C-C of Figure 11;
Figure 13 is an enlarged side cross-sectional view of the male connector of Figures 10 to 12; and
Figure 14 is a perspective view of an insert for the male connector of Figures 10 to 13.

### DETAILED DESCRIPTION

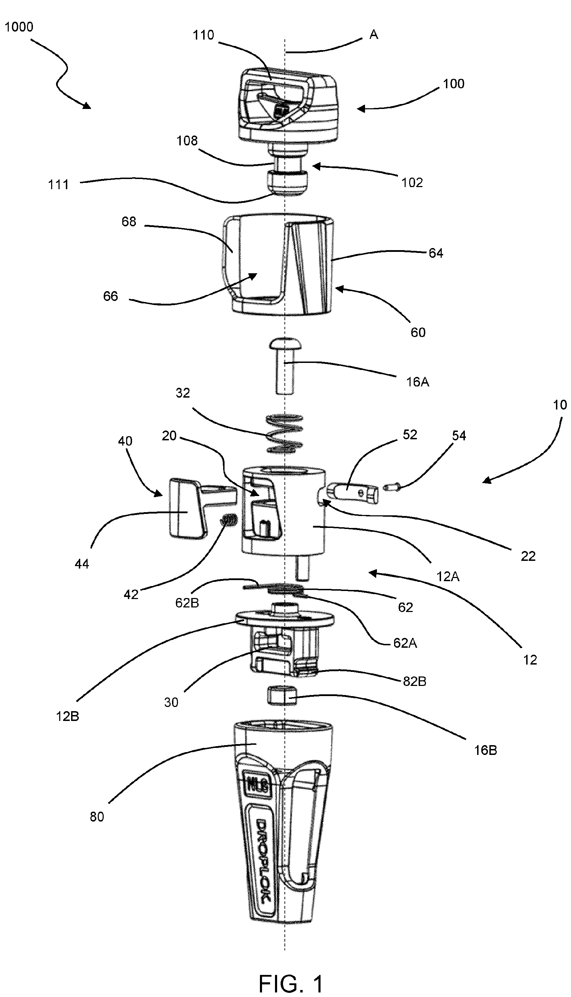

Referring to Figures 1 to 5, a coupling assembly for connecting a tool to a strap or lanyard is indicated at 1000. As will be outlined in more detail below, the coupling assembly 1000 has a male connector 100 and a female connector 10.

The male connector 100 has a shaft 102 which extends longitudinally from a first end 104 to a second end 104. In other words, the shaft 102 extends along a longitudinal axis A of the coupling assembly 1000 when the male connector 100 is connected to the female connector 10.

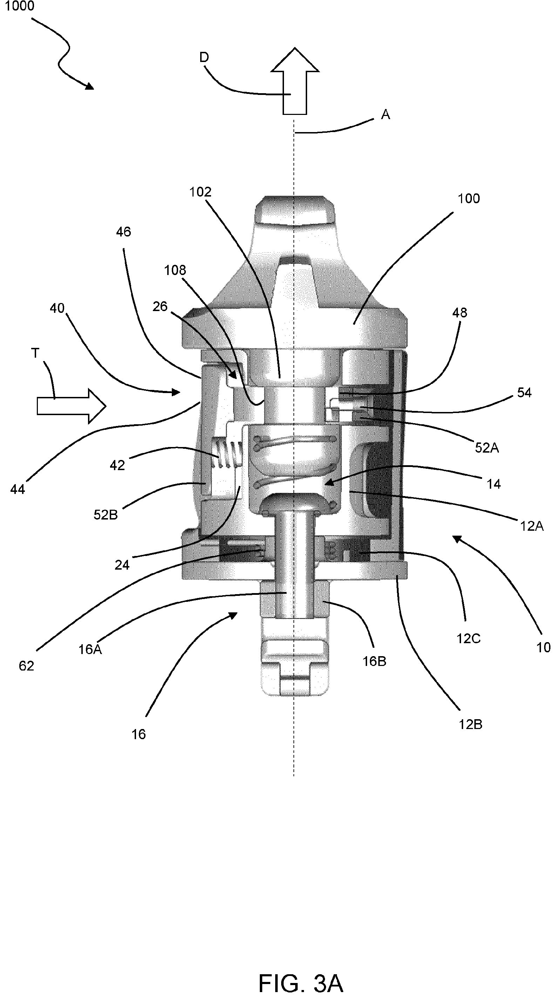

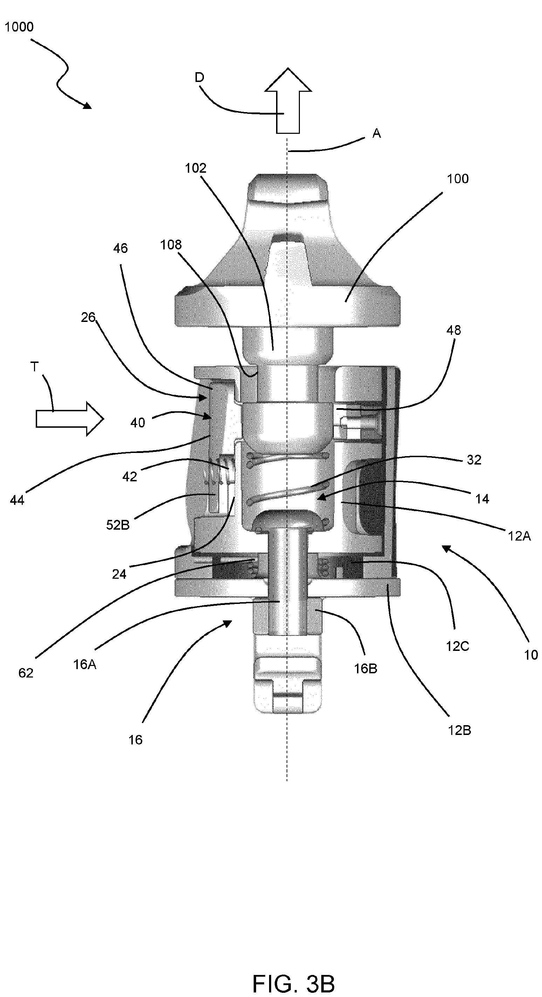

The female connector 10 has a connector body 12 which defines a longitudinal passage 14 for receiving the shaft 102 of the male connector 100 (as best illustrated in Figures 3A and 3B).

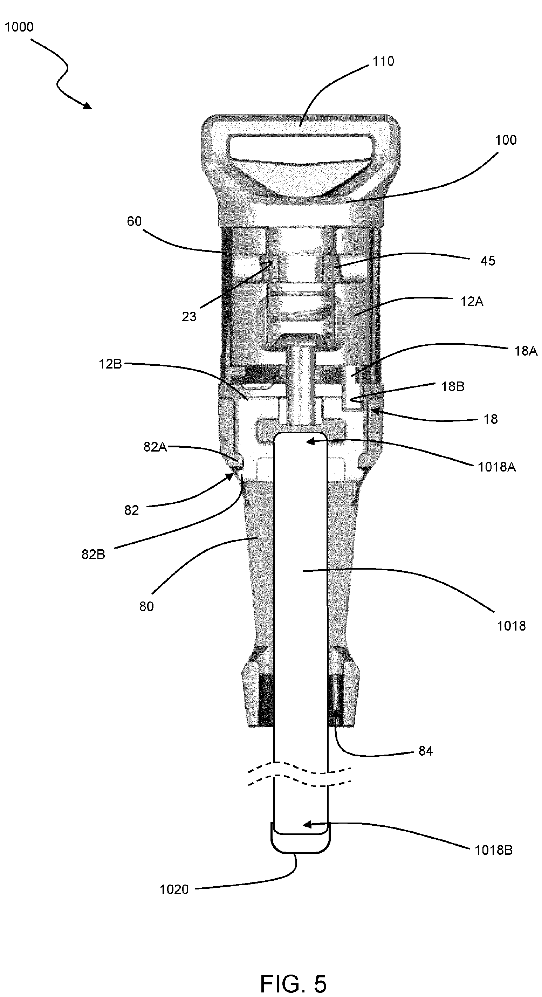

In the illustrated embodiment, the connector body 12 consists of a first portion 12A which defines the longitudinal passage 14, and a second portion 12B which has a loop 30 for coupling to a strap or lanyard 1018 (as illustrated in Figure 5). In the illustrated embodiment, the first portion 12A is coupled to the second portion 12B by a securing arrangement 16. The illustrated securing arrangement 16 includes a fastener 16A which passes through bores in the first and second portions 12A, 12B, and a nut 16B for receiving the fastener 16A. In alternative embodiments, the first and second portions 12A, 12B may be secured by any other suitable means (e.g., bonded together). In alternative embodiments, the connector body 12 is unitary (i.e., the first and second portions 12A, 12B are integrally formed).

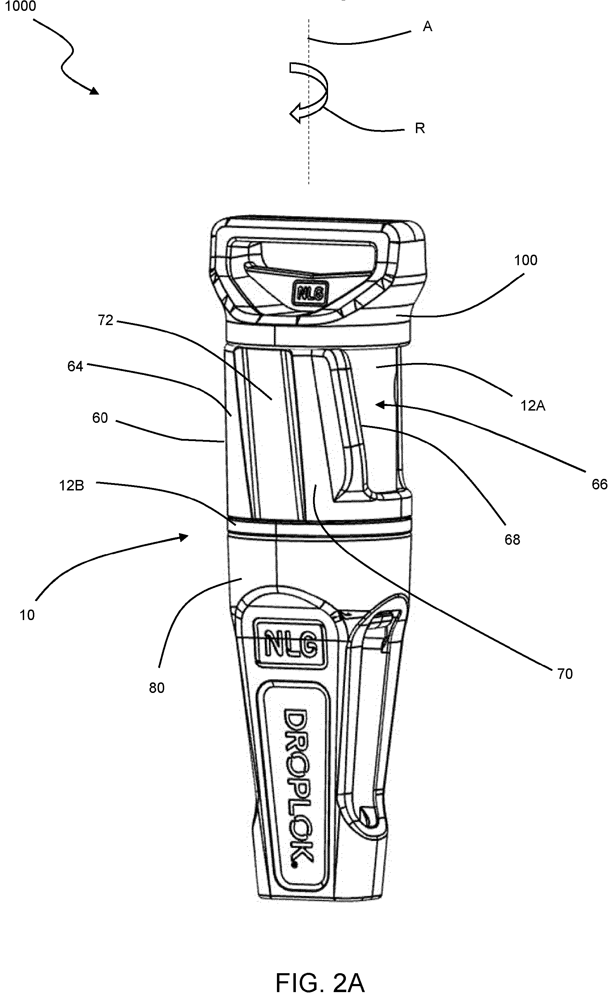

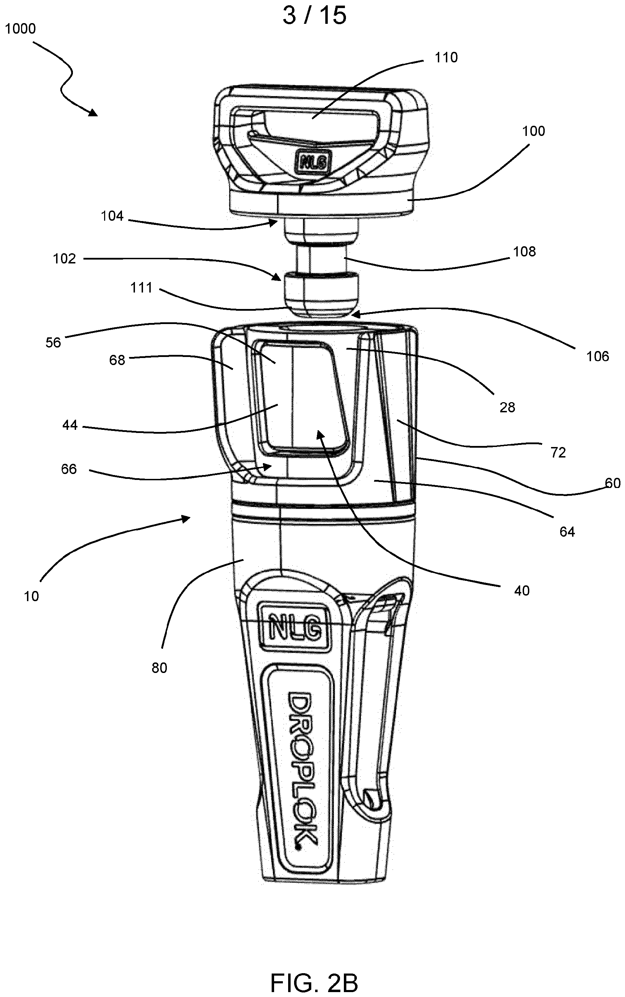

As will be described in more detail below, the illustrated coupling assembly 1000 has an engaging member 40 which is movable between an engaged state (illustrated in Figures 2A, 3A and 4A) in which the engaging member 40 is configured to inhibit disconnection of the male and female connectors 100, 10, and a disengaged state (illustrated in Figures 2B, 3B and 4B) in which disconnection of the male and female connectors 100, 10 is permitted. In the illustrated embodiment, the engaging member 40 is part of the female connector 10.

As will also be described in more detail below, the illustrated coupling assembly 1000 has a blocking member 60 which is movable between a first position (illustrated in Figure 2A) in which the blocking member 60 is configured to inhibit actuation of the engaging member 40, and a second position (illustrated in Figure 2B) in which actuation of the engaging member 40 is permitted. In the illustrated embodiment, the blocking member 60 is part of the female connector 10.

In the illustrated embodiment, the engaging member 40 is manually movable from the engaged state to the disengaged state. In other words, no designated tool, such as a key, is required for moving the engaging member 40 to the disengaged state, which may allow easy hand actuation of the engaging member 40 (e.g., by gripping the coupling assembly 1000 and pushing the engaging member 40 with one or more digits). In the illustrated embodiment, the engaging member 40 is configured to be manually pushed (e.g., in a transverse direction T) to transition from the engaged state to the disengaged state. To facilitate this, the engaging member 40 has an outer surface 56 which defines a push button 44 which can be pushed in the transverse direction T to move the engaging member 40 from the engaged state to the disengaged state.

Referring now to Figures 2A and 2B, the blocking member 60 will be described in more detail. In the illustrated embodiment, the blocking member 60 covers the engaging member 40 in the first position (as illustrated in Figure 2A). In this way, the push button 44 cannot be pressed and the engaging member 40 thus cannot be moved. Conversely, the blocking member 60 does not cover the engaging member 40 in the second position (as illustrated in Figure 2B). In this way, the push button 44 can be pressed and the engaging member 40 thus can be moved.

In alternative embodiments, the blocking member 60 inhibits actuation of the engaging member 40 via an alternative means. For example, the push button 44 of the engaging member 40 may still be visible in the first position of the blocking member 60, but a mechanical interference between the blocking member 60 in the first position and the engaging member 40 may inhibit movement of the engaging member 40 even if the push button 44 is pressed.

In the illustrated embodiment, the blocking member 60 is rotatable between the first and second positions. In particular, the blocking member 60 has a sleeve 64 which at least partly surrounds the connector body 12 (e.g., the first portion 12B of the connector body 12 in the illustrated embodiment). The sleeve 64 is rotatable between the first and second positions. In the illustrated embodiment, the sleeve 64 has a recess 66 which is shaped to provide access to the engaging member 40 (e.g., the push button 44 of the engaging member 40) when the blocking member 60 is in the second position.

In alternative embodiments, the blocking member 60 may be configured to move in a longitudinal direction to transition between the first and second positions. For example, the blocking member 60 may have a sleeve which at least partly surrounds the connector body 12 and which is movable in the longitudinal direction to transition between the first and second positions.

In the illustrated embodiment, the blocking member 60 is biased towards the first position (illustrated in Figure 2A). This decreases the chances of accidental disconnection of the male connector 100 from the female connector 10. In other words, the default state of the blocking member 60 is the first position, and a user has to actively move the blocking member 60 to the second position if they want to disconnect the male and female connectors 100, 10.

In the illustrated embodiment, the coupling assembly 1000 has a torsion spring 62 which is configured to bias the blocking member 60 towards the first position. The torsion spring 62 is part of the female connector 10. The torsion spring 62 has a first leg 62A (shown on Figure 1) configured to contact the connector body 12, and a second leg 62B configured to contact the blocking member 60. In this way, when the blocking member 60 rotates to the second position, the first and second legs 62A, 62B of the torsion spring 62 are moved relative to each other, which causes a biasing force urging the first and second legs 62A, 62B to their original orientation. As best illustrated in Figures 3A and 3B, the torsion spring 62 of this embodiment is provided within a gap 12C between the first and second portions 12A, 12B of the connector body 12.

In alternative embodiments (e.g., those where the blocking member 60 moves longitudinally rather than rotationally) the coupling assembly 1000 may have a compression spring which is configured to bias the blocking member 60 towards the first position. In alternative embodiments, any other suitable biasing member may be provided to bias the blocking member 60 towards the first position (e.g., an elastic member).

In the illustrated embodiment, the blocking member 60 is manually movable to the second position (e.g., against the biasing force of the torsion spring 62). In other words, no designated tool, such as a key, is required for moving the blocking member 60 to the second position, which may allow easy hand actuation of the blocking member 60 (e.g., by gripping the coupling assembly 1000 and pushing the blocking member 60 with one or more digits).

In the illustrated embodiment, the blocking member 60 is configured to be manually pushed (e.g., in a rotational direction) to transition from the first to the second position. In particular, the blocking member 60 has an abutment surface 68 which can be pushed to move the blocking member 60 from the first position to the second position.

In the illustrated embodiment, the abutment surface 68 is positioned adjacent to the engaging member 40 when the blocking member 60 is in the second position (as illustrated in Figure 2B). In this way, a first part (e.g., an edge) of a human thumb can be used to push the abutment surface 68 to move the blocked member to the second position and a different part (e.g., an underside) of the same thumb can then be used to push the engaging member 40 to the disengaged state.

In other words, the coupling assembly 1000 is configured and arranged so that the blocking member 60 can be moved to the second position and the engaging member 40 can be moved to the disengaged state with a single human hand. In this way, a tool coupled by the coupling assembly 1000 can be held with one hand and the coupling assembly 1000 can be disconnected with the other hand (e.g., when putting the tool away for storage). This may reduce the chances of dropping the tool.

In alternative embodiments, single handed disconnection of the coupling assembly 1000 may be achieved via a different configuration to the illustrated embodiment. For example, the abutment surface 68 may be pushed to move the blocking member 60 in a longitudinal, rather than rotational, direction. Alternatively, the blocking member 60 may be selectively engaged by a locking member (not shown) to keep it in the second position, which may then allow the engaging member 40 to be actuated without having to simultaneously keep the blocking member 60 in the second position against the biasing force of the torsion spring 62.

In the illustrated embodiment, the blocking member 60 has an outer surface 70 and the abutment surface 68 projects from the outer surface 70. In other words, the abutment surface 68 extends further outwards in a transverse (e.g., radial) direction, than the outer surface 70. This increases the contact area for a thumb, which may make it easier to move the blocking member 60 to the second position, without requiring the whole blocking member 60 to have a thicker diameter.

In the illustrated embodiment, the abutment surface 68 extends substantially longitudinally. This may help to rotate the blocking member 60. In alternative embodiments, the abutment surface 68 may extend substantially circumferentially, which may be useful for moving alternative blocking members 60 in a longitudinally direction.

In the illustrated embodiment, the outer surface 70 of the blocking member 60 has one or more gripping formations 72. In particular, a plurality of gripping formations 72 are spaced about around a circumference of the outer surface 70. These gripping formations 72 facilitate moving (e.g., rotating) and/or resisting movement (e.g., resisting rotation) of the blocking member 60. For example, after pushing the abutment surface 68 of the blocking member 60 with a thumb to transition to the second position, fingers of the same hand may engage the gripping formations 72 to resist movement of the blocking member 60 back to the first position, while the thumb is used to push the engaging member 40 to the disengaged state.

In the illustrated embodiment, the gripping formations 72 are recesses in the outer surface 70 which extend substantially longitudinally. This may help to rotate and/or resist rotation of the blocking member 60. In alternative embodiments, the gripping formations 72 may extend substantially circumferentially, which may be useful for resisting longitudinal movement of alternative blocking members 60. In alternative embodiments, the gripping formations 72 are projections (e.g., ribs) rather than recesses.

It will be understood that the illustrated coupling arrangement 1000 requires two separate actions to disengage the male and female connectors 100, 10. In particular, the blocking member 60 must be moved to the second position and the engaging member 40 must then be moved to the disengaged state. This reduces the likelihood of accidental disconnection of the male and female connectors 100, 10.

In some embodiments, the coupling arrangement 1000 further includes a locking member (not shown) configured to selectively inhibit or permit movement of the blocking member 60. For example, the locking member may include a slidable pin which is configured to be received in a corresponding recess on the blocking member 60 to inhibit movement of the blocking member 60, and to be removed from said corresponding recess to permit movement of the blocking member 60. Such a locking member may be compatible with different embodiments shown and described, including rotatable and longitudinally moving blocking members 60. The locking member may be part of the female connector 10. In embodiments including such a locking member, it will be understood that the coupling arrangement 1000 may require three separate actions to disengage the male and female connectors 100, 10. In particular, the locking member may be actuated to permit movement of the blocking member 60, the blocking member 60 may then be moved to the second position, and the engaging member 40 may then be moved to the disengaged state. This may further reduce the likelihood of accidental disconnection of the male and female connectors 100, 10.

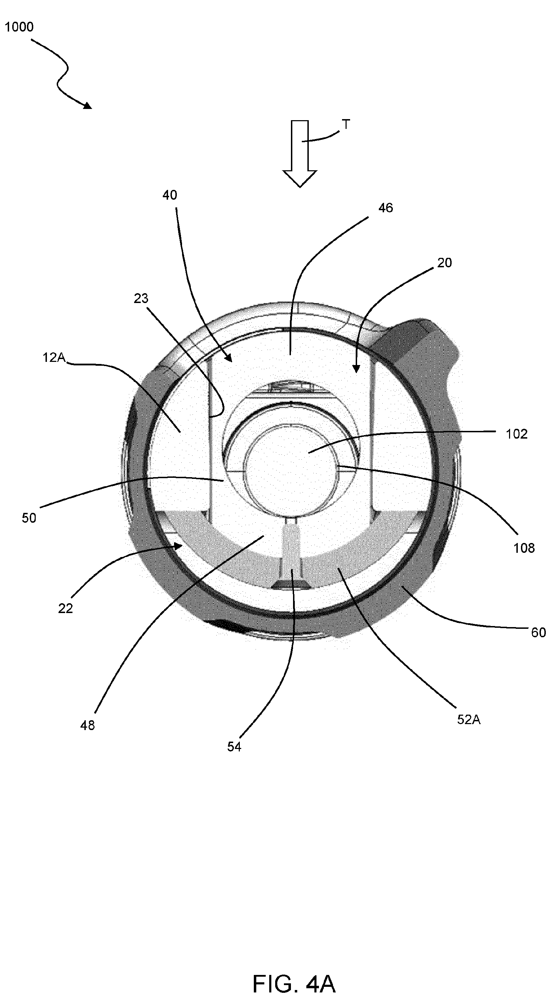

Referring now to Figures 3A to 4B, the engaging member 40 will now be described in more detail. In the illustrated embodiment, the engaging member 4 is biased towards the engaged state (shown in Figures 3A and 4A. This removes the need for a user to actively move the engaging member 40 to the engaged state. In other words, unless the engaging member 40 is urged against the biasing force to the disengaged state, the engaging member 40 will remain in the engaged state and the male and female connectors 100, 10 will remain connected. Furthermore, this biasing may reduce the likelihood of accidentally moving the engaging member 40 to the disengaged state, because small accidental forces acting on the engaging member 40 would be countered by the biasing force.

In the illustrated embodiment, the coupling assembly 1000 has a compression spring 42 configured to bias the engaging member 40 towards the engaged state. The compression spring 42 is part of the female connector 10. In particular, the compression spring 42 is provided in a button recess 26 of the connector body 12 which accommodates the push button 44. The compression spring 42 is positioned by a spring support 24 of the connector body 12 so that the compression spring 42 is compressed between an axial surface of the button recess 26 and an inner side of the push button 44. In this way, a biasing force is provided which urges the push button 44 in an outwards direction (i.e., opposite to the transverse direction T labelled on Figures 3A to 4B).

In alternative embodiments (e.g., those where the engaging member 40 moves rotationally rather than in a transverse direction) the coupling assembly 1000 may have a torsion spring which is configured to bias the engaging member 40 towards the engaged state. In alternative embodiments, any other suitable biasing member may be provided to bias the engaging member 40 towards the engaged state (e.g., an elastic member).

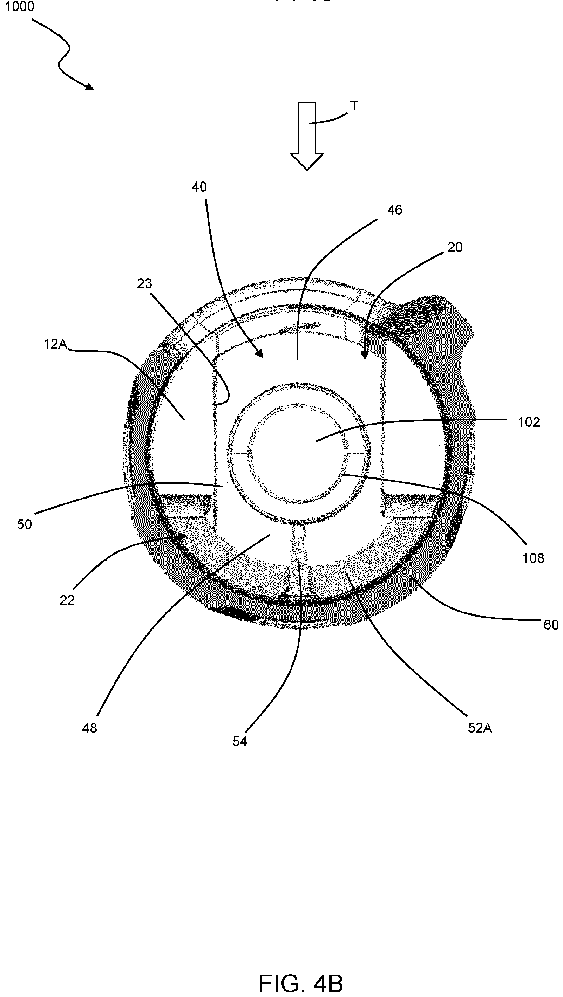

As described briefly above, the engaging member 40 is configured to move in a transverse direction T relative to the male and female connectors 100, 10 to transition between the engaged and disengaged states. In more detail, the shaft 102 of the male connector 100 has an engagement formation 108 between the first and second ends 104, 106. The engaging member 40 is fixed against longitudinal movement relative to the female connector 10 (i.e., relative to the connector body 12). The engaging member 40 is configured to engage the engagement formation 108 of the male connector 100 when in the engaged state (as illustrated in Figures 3A and 4B) to inhibit relative longitudinal movement between the male and female connectors 100, 10.

In the illustrated embodiment, the engagement formation 108 is an annular groove. In alternative embodiments, the engagement formation 108 may be semi-annular or non-annular. In alternative embodiments, the engagement formation 108 may be a projection rather than a groove.

In alternative embodiments, the male connector 100 may have an engagement formation 108 which is separate to the shaft 102 and which extends around an outer surface of the female connector 10.

In alternative embodiments, the female connector 10 may have an engagement formation 108 on an outer surface or within the longitudinal passage 14, and the engaging member 40 may be fixed against longitudinal movement relative to the male connector 100. In such embodiments, the engaging member 40 may be configured to engage the engagement formation 108 of the female connector 10 when in the engaged state to inhibit relative longitudinal movement between the male and female connectors 100, 10.

In the illustrated embodiment, the engaging member 40 has a first side 46 which can be pushed (e.g., by pushing the push button 44 at the first side 46) to move the engaging member 40 from the engaged to the disengaged state. The engaging member 40 also has a second side 48 opposite to the first side 46 which is configured to engage the engagement formation 108 when the engaging member 40 is in the engaged state.

As best illustrated in Figures 4A and 4B, the engaging member 40 has a ring 50 which extends from the first side 46 to the second side 48 to surround the shaft 102 of the male connector 100. This may provide a robust connection between the first and second sides 46, 48 of the engaging member 40, whilst permitting the shaft 102 of the male connector 100 to pass through an inside of the ring 50 when in the disengaged state (as illustrated in Figure 4B).

In the illustrated embodiment, the engaging member 40 is configured to slide in the transverse direction T to transition between the engaged and disengaged states. In particular, the engaging member 40 has edges 45 which link the first and second sides 46, and the edges 45 are slidable within a slot 23 that extends in a transverse direction through the connector body 12 (as illustrated in Figures 4A to 5). Because of the sliding movement, a closer clearance between the edges 45 of the engaging member 40 and the slot 23 may be achieved than would be possible with alternative types of movement (e.g., pivoting of the engaging member 40).

In alternative embodiments, the engaging member 40 may be attached to the female connector 10 (i.e., to the connector body 12) at a pivot so that a portion of the engaging member 40 spaced apart from the pivot moves approximately in the transverse direction T.

As best illustrated in Figures 1, 4A and 4B, the engaging member 40 is received in one or more transverse apertures 20, 22 through the female connector body 12 (e.g., through the first portion 12A of the connector body in the illustrated embodiment). The engaging member 40 slides through the one or more transverse apertures 20, 22 to transition between the engaged and disengaged states. In the illustrated embodiment, the one or more transverse apertures 20, 22 include a first transverse aperture 10 which receives the first side 46 of the engaging member 40 and a second transverse aperture 22 which receives the second side 48 of the engaging member. The first and second transverse apertures 20, 22 are connected via the slot 23 described above.

In the illustrated embodiment, the coupling assembly has one or more stop members 52A, 52B configured to retain the engaging member 40 in the connector body 12. The one or more stop members 52A, 52B limit movement of the engaging member 40 beyond the engaged and disengaged states. In particular, there is a first stop member 52A which is arranged to limit movement of the engaging member 40 in a direction opposite to the transverse direction T illustrated in Figures 3A to 4B. There is also a second stop member 52B which is arranged to limit movement of the engaging member 40 in the transverse direction T. The first stop member 52A is configured to engage a portion of the connector body 12 surrounding the second transverse aperture 22. Similarly, the second stop member 52B is configured to engage a portion of the connector body 12 surrounding the first transverse aperture 20.

In the illustrated embodiment, the first stop member 52A is a discrete component which is secured to the engaging member 40. In particular, the first stop member 52A is secured to the second side 48 of the engaging member 40 by a transverse fastener 54. Conversely, the second stop member 52B is integrally formed with the engaging member 40. In particular, the second stop member 52B is provided by a lower portion of the push button 44 of the engaging member 40. In alternative embodiments, the first stop member 52A may be integrally formed with the engaging member 40 and/or the second stop member 52B may be a discrete component secured to the engaging member 40.

In alternative embodiments, any other suitable stop member arrangement may be provided.

In the illustrated embodiment, the shaft 102 of the male connector 100 has a tapered free end 111. This may facilitate insertion of the free end 111 into the longitudinal passage 14 of the female connector 10 (e.g., of the connector body 12). Furthermore, the tapered free end 111 may provide a guide surface for pushing the engaging member 40 out of the longitudinal passage 14 to the disengaged state during insertion of the shaft 102 of the male connector 100 into the longitudinal passage 14. In other words, the tapered free end 111 may provide a guide surface for pushing the engaging member 40 against the biasing force of the compression spring 42 which urges the engaging member 40 into the longitudinal passage 14 (i.e., to engage the engagement formation 108).

In some embodiments, the outer surface 56 of the engaging member 40 has a different appearance to the outer surface 28 of the connector body 12 and the outer surface 70 of the blocking member 60. This may allow a user of the coupling assembly 1000 to visually identify whether the male and female connectors 100, 10 could be disconnected (by actuation of the engaging member). This may help to improve safety in the event that the blocking member 60 is accidentally moved or stuck in the second position, as the user will be visually alerted to this.

In some embodiments, the outer surface 56 of the engaging member 40 may be a different colour to the outer surfaces 28, 70 of the connector body 12 and blocking member 60. For example, the outer surface 56 of the engaging member 40 may be red and the outer surfaces 28, 70 of the connector body 12 and blocking member 60 may be a different colour (e.g., a neutral colour such as white or black). The outer surface 56 of the engaging member 40 being red may be particularly useful for visually indicating a dangerous state of the coupling assembly 1000, because red is commonly used in construction and industrial settings to signify danger.

As best illustrated in Figures 3A and 3B, the coupling assembly has a biasing member 32 inside the longitudinal passage 14 of the connector body 12. In this way, when the shaft 102 of the male connector 100 is received within the longitudinal passage 14 (as illustrated in Figure 3A) the biasing member 32 is configured to urge the second end 106 of the shaft 102 in an outboard direction D of the longitudinal passage 14. This may facilitate ejection of the shaft 102 of the male connector 100 from the longitudinal passage 14 when the engaging member 40 is moved to the disengaged state, which may allow one-handed disconnection of the male and female connectors 100, 10. In other words, when a user moves the engaging member 40 to the disengaged state, a separate hand is not needed to pull the shaft 102 of the male connector 100 out of the female connector 10.

In the illustrated embodiment, the biasing member 32 is a compression spring, in particular a coil spring. The coil spring 32 is secured in place inside the longitudinal passage 14 by the fastener 16A which secures the first and second portions 12A, 12B of the connector body 12. In particular, the coil spring has an inboard end with a reduced diameter which is engaged by a head of the fastener 16A to secure the coil spring 32 in place. In alternative embodiments (e.g., those with an integral connector body 12), a designated fastener 16A may be provided for the same purpose. In other embodiments, any other suitable type of biasing member 32 may be used instead of a coil spring (e.g., an elastic member).

As best illustrated in Figures 1, 2A, 2B and 5, the coupling assembly 1000 includes a gripping portion 80 arranged adjacent to the blocking member 60 and engaging member 40. In this way, a user can grip the gripping portion 80 with a lower portion (e.g., palm and lower fingers) of a hand and move the blocking member 60 and engaging member 40 with an upper portion (e.g., thumb) of the same hand. This may facilitate single handed disconnection of the coupling assembly 1000, as it allows the coupling assembly 1000 to be stabilised to a greater extent than would be possible by gripping a strap or lanyard coupled to the connector body 12. Such a gripping portion 80 may also provide a surface for adding a safety label, or other insignia.

In the illustrated embodiment, the gripping portion 80 is part of the female connector 10. In particular, the gripping portion 80 is a separate component coupled to the connector body 12. In more detail, the gripping portion 80 has a first formation 82A configured to engage a second formation 82B on the connector body 12 (i.e., the second portion 12B of the connector body 12 in the illustrated embodiment) to form an inter-engaging connection 82. Such an inter-engaging connection 82 is illustrated in Figure 5. In alternative embodiments, the gripping portion 80 and connector body 12 are coupled via any other suitable means (e.g., complementary threads). Alternatively, the gripping portion 80 may be integrally formed with the connector body 12.

As best illustrated in Figure 5, the coupling assembly 1000 may include a strap or lanyard 1018 which has a first end 1018A coupled to the female connector 10, and a second end 1018B for coupling to an anchor point 1020. The connector body 12 has a loop 30 to which the first end 1018A of the strap or lanyard 1018 can be coupled.

The gripping portion 80 has a recess 84 such that the strap or lanyard 1018 can be passed through the recess 84 and coupled to the loop 30 of the connector body 12. In this way, the gripping portion 80 acts as a cover for the loop 30 of the connector body 12 and an end of the strap or lanyard 1018.

In alternative embodiments, there may be a cover for the loop 30 of the connector body 12 which does not act as a gripping portion 80 (e.g., is not arranged adjacent to the blocking member 60 and engaging member 40). Such a cover may still have a recess 84 such that a strap or lanyard 1018 can be passed through the recess 84 and coupled to the loop 30 of the connector body 12.

Such a gripping portion 80 and/or separate cover may protect the first end 1018A of the strap or lanyard 1018, which may increase the robustness of the connection and extend the life of the coupling assembly 1000.

In some embodiments, the gripping portion 80 is of a flexible and durable material, such as thermoplastic polyamide elastomers (TPA). This may facilitate effective gripping and/or protection of the end of the strap or lanyard 1018 coupled to the connector body 12.

In some embodiments, the connector body 12 and/or engaging member 40 and/or blocking member 60 and/or shaft 102 of the male connector 100 and/or remainder of the male connector 100 are made of plastics material (e.g., such as nylon or other engineered plastic). In some embodiments, the plastics material includes structural reinforcing material (e.g., such as glass powder and/or glass fibres). For example, the connector body 12 and/or engaging member 40 and/or blocking member 60 and/or shaft 102 of the male connector 100 and/or remainder of the male connector 100 may be made of glass filled nylon. Such materials are durable, scratch-resistant, and capable of withstanding conditions on typical work sites on which the coupling assembly may be used. Such materials are also not electrically conductive which may increase safety in work environments where high voltages may be present.

In other embodiments, the connector body 12 and/or engaging member 40 and/or blocking member 60 and/or shaft 102 of the male connector 100 and/or remainder of the male connector 100 are of any suitable material, e.g., other durable, scratch-resistant and/or non-conductive materials.

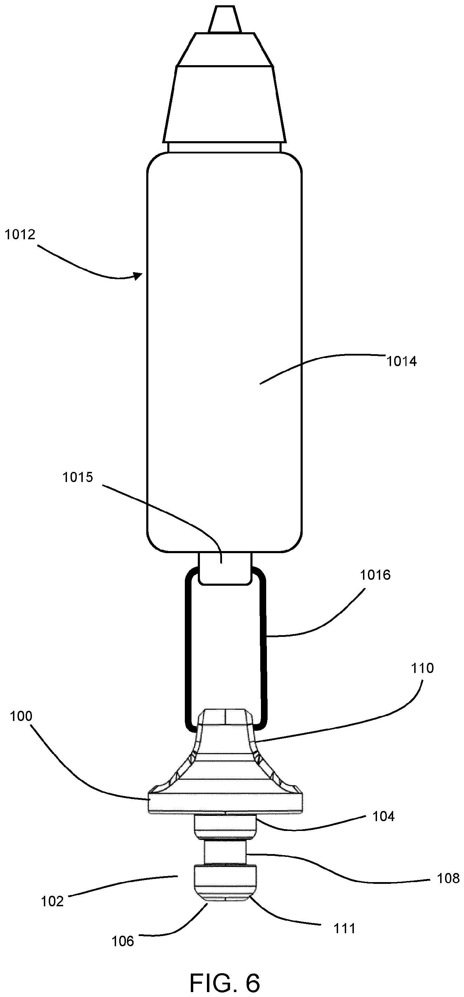

In the illustrated embodiment, the male connector 100 has a loop 110 for receiving a strap or lanyard. For example, Figure 6 illustrates a strap 1016 which passes through the loop 110 of the male connector 100 to couple the male connector 100 to a tool 1012 (e.g., by passing through a loop 1015 in a body 1014 of the tool 1012. In alternative embodiments, a lanyard 1018 may be coupled to the loop 110 of the male connector 100 and a strap 1016 may be coupled to the loop 30 of the female connector 12 to couple the female connector 10 to a tool 1012.

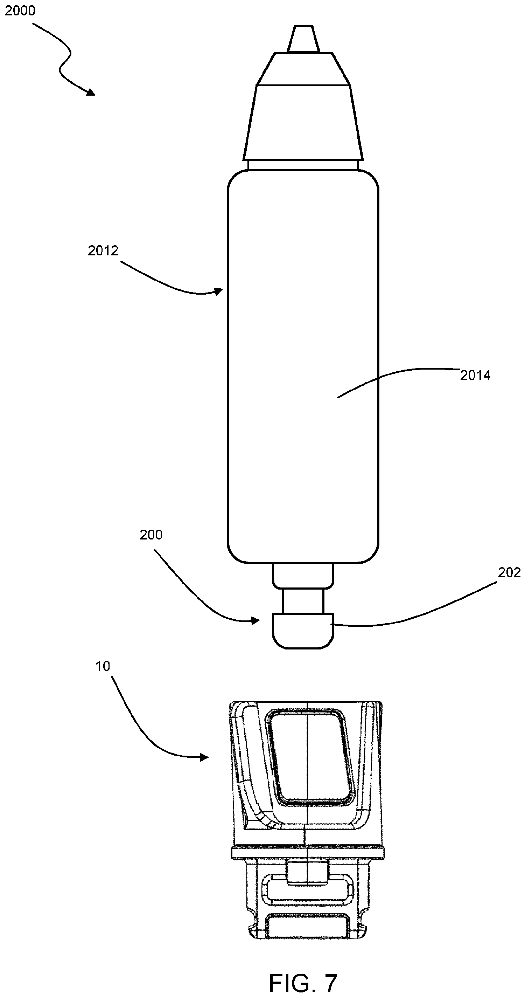

Referring now to Figure 7, a coupling assembly according to an alternative embodiment is indicated at 2000. In this embodiment, the female connector 10 is the same as the female connector 10 of the embodiment of Figures 1 to 5 (although the gripping portion 80 is not shown in this view). However, the male connector 200 is integrally formed with a body 2014 of a tool 2012. In particular, the shaft 202 of the male connector 200 is integrally formed with the body 2014 of the tool 2012. Otherwise, the shaft 202 is of the same configuration as the shaft 102 of the previous embodiment.

In alternative embodiments, the female connector 10 is integrally formed with the body 2014 of the tool 2012. For example, the connector body 12 may be integrally formed with the body 2014 of the tool 2012.

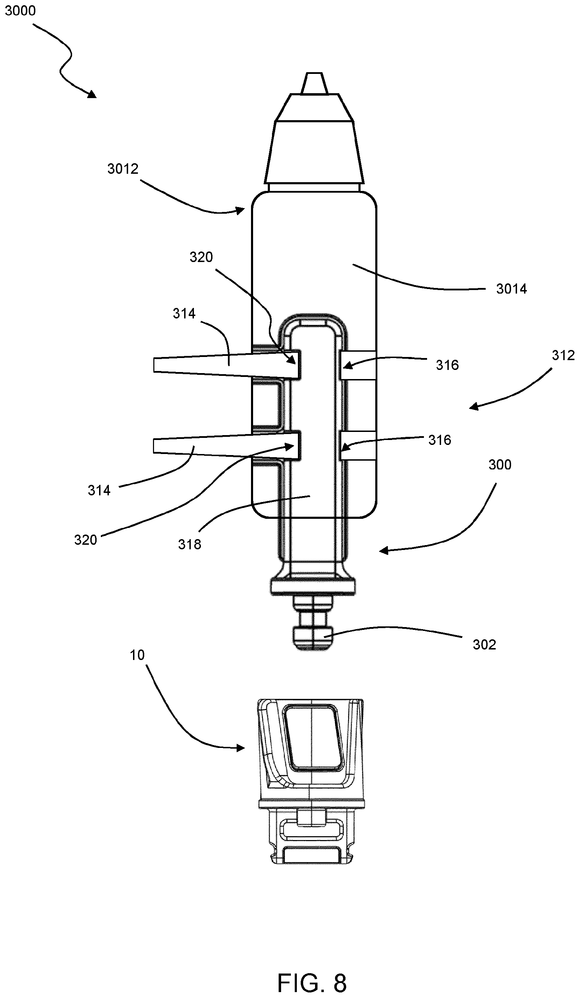

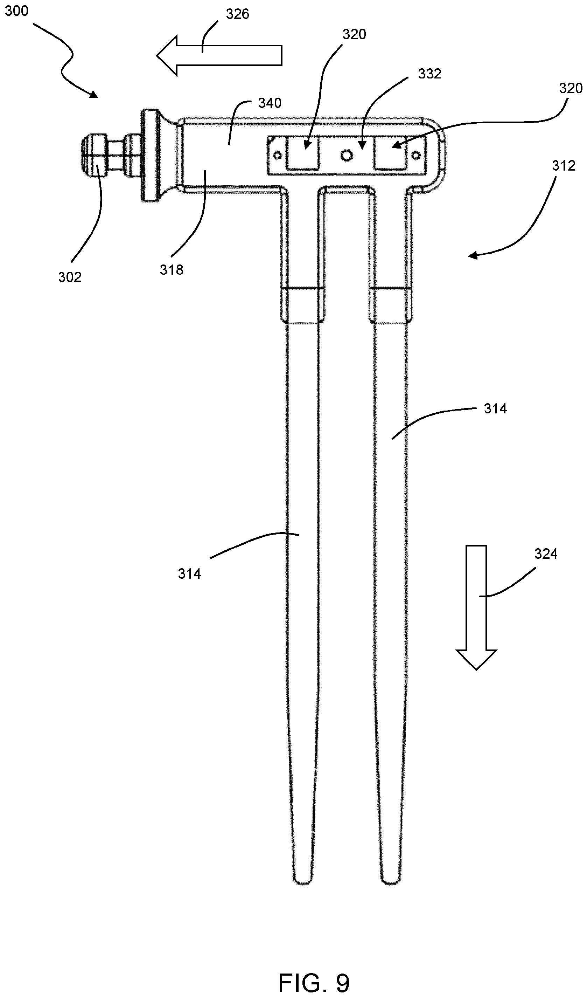

Referring now to Figures 8 and 9, a coupling assembly according to an alternative embodiment is indicated at 3000. In this embodiment, the female connector 10 is the same as the female connector 10 of the embodiment of Figures 1 to 5 (although the gripping portion 80 is not shown in this view). The shaft 302 of the male connector 300 is also of the same configuration as the shaft 102, 202 of the previous embodiments. However, the male connector 300 has a tether arrangement 312 for tethering the male connector 300 to a tool 3012.

In the illustrated embodiment, the tether arrangement 312 includes one or more straps 314 for wrapping around the tool 3012 (e.g., around a body 3014 of the tool 3012). The tether arrangement 312 also has one or more sockets 316 for receiving the one or more straps 314. As will be described in more detail below, each of the one or more sockets 316 is configured to engage the respective strap 314 as it is inserted into the socket 316, to inhibit movement of the respective strap 314 out of the socket 316.

In the illustrated embodiment, there are two straps 314 and two sockets 316, but in alternative embodiments there may be greater or less than two straps 314 and sockets 316.

As best illustrated in Figure 9, the male connector 300 has a main body 318, and the straps 314 extend from the main body 318 in a first direction 324. The shaft 302 extends from the main body 318 in a second direction 326 perpendicular to the first direction 324. The main body 318 has a planar surface 340 for abutment against the body 3014 of the tool 3012.

In the illustrated embodiment, each of the sockets 316 has a socket passage 320 for receiving the respective strap 314, and one or more teeth (not shown in this embodiment) which are arranged at an angle to the socket passage 320. The one or more teeth are arranged to permit insertion of the respective strap 314 through the socket passage 320 in a first direction, and to inhibit removal of the strap from the socket passage in a second direction opposite to the first direction.

The one or more teeth may be of harder material than the one or more straps 314. For example, the one or more teeth may be of metallic material (e.g., steel material), and the one or more straps 314 may be of a flexible plastics material (e.g., nylon or other engineered plastic). This may allow the one or more teeth to bite into the straps 314.

The one or more teeth may be provided on one or more plates (not shown in this embodiment) which are arranged at an angle relative to the socket passage 320. The one or more plates may be resiliently deflectable.

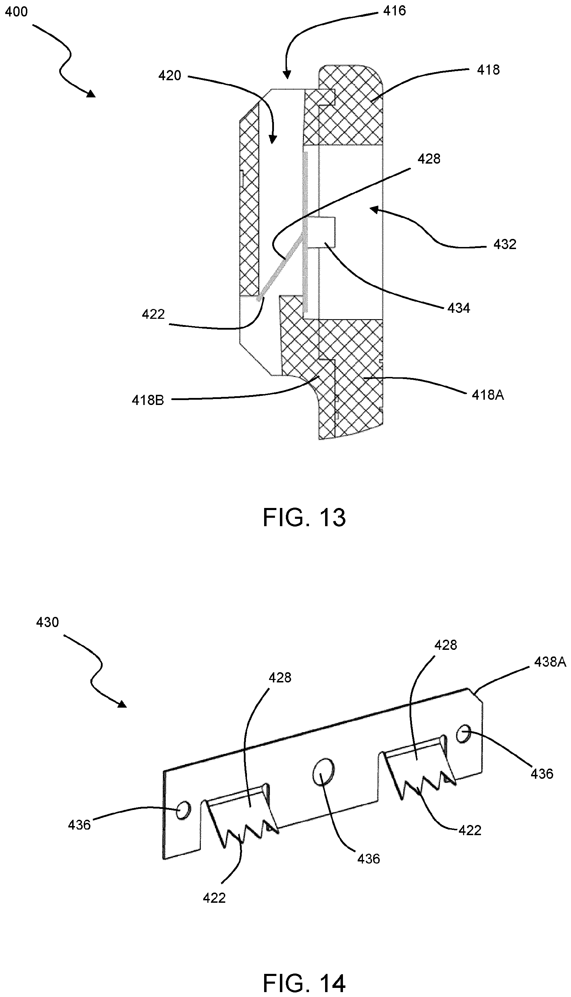

In some embodiments, the one or more plates are part of an insert (e.g., the insert 430 illustrated in Figure 14). The insert may be fitted into a recess 332 in a main body 318 of the male connector 300.

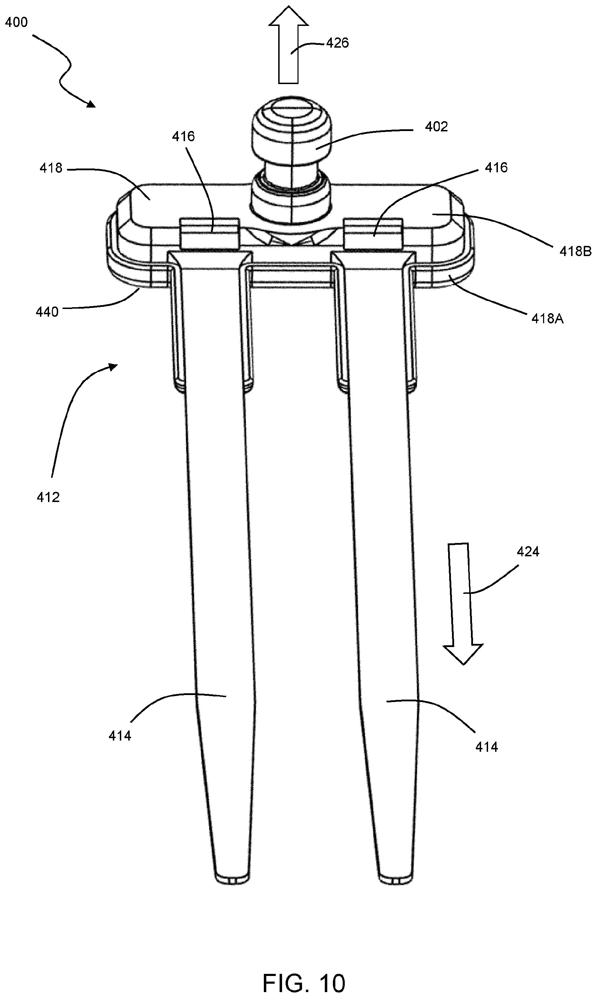

Referring now to Figures 10 to 14, an alternative male connector 400 for the coupling assembly 3000 of Figure 8 is shown. The male connector 400 of this embodiment is similar to the male connector 300 of Figures 8 and 9, apart from the orientation of the shaft 402. In particular, the shaft 302 of Figures 8 and 9 extends in a second direction 326 which is substantially parallel to the planar surface 340 of the main body 318, whereas the shaft 402 of this embodiment extends in a second direction 426 which is perpendicular to the planar surface 440 of the main body 418, as well as perpendicular to the first direction 424 of the straps 414.

The shaft 402 of the male connector 400 is of the same configuration as the shaft 102, 202, 302 of the previous embodiments. In this way, the male connector 400 can be coupled to the female connector 10 of the previous embodiments.

The male connector 400 has the same tether arrangement 412 for tethering the male connector 400 to a tool as the tether arrangement 312 of the previous embodiment. In particular, the tether arrangement 412 includes one or more straps 414 for wrapping around a tool and one or more sockets 416 for receiving the one or more straps 414. Each of the one or more sockets 416 is configured to engage the respective strap 414 as it is inserted into the socket 416, to inhibit movement of the respective strap 414 out of the socket 416.

In the illustrated embodiment, there are two straps 414 and two sockets 416, but in alternative embodiments there may be greater or less than two straps 414 and sockets 416.

As in the previous embodiment, the main body 418 has a planar surface 440 for abutment against a body of a tool.

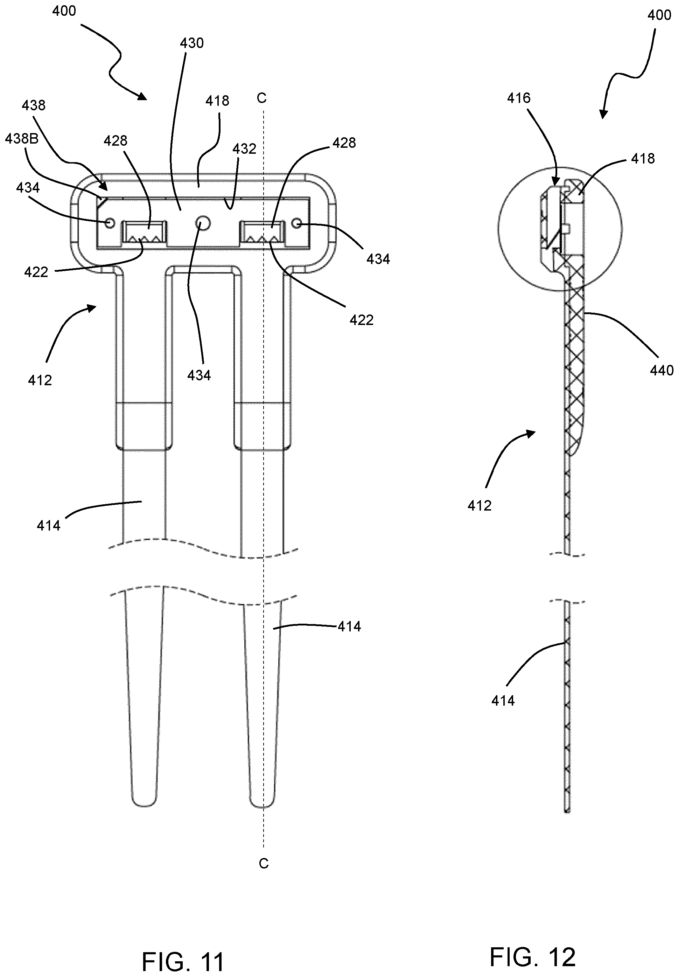

Referring now to Figures 12 and 13, the sockets 416 are shown in more detail. In the illustrated embodiment, each of the sockets 416 has a socket passage 420 for receiving the respective strap 414, and one or more teeth 422 which are arranged at an angle to the socket passage 420. The one or more teeth 422 are arranged to permit insertion of the respective strap 414 through the socket passage 420 in a first direction (e.g., a downwards direction in the view of Figures 12 and 13), and to inhibit removal of the strap 414 from the socket passage 420 in a second direction opposite to the first direction (e.g., in an upwards direction in the view of Figures 12 and 13).

As mentioned above, the one or more teeth 422 may be of harder material than the one or more straps 414. For example, the one or more teeth 422 may be of metallic material (e.g., steel material), and the one or more straps 414 may be of a flexible plastics material (e.g., nylon or other engineered plastic). This may allow the one or more teeth 422 to bite into the straps 414.

As best illustrated in Figures 13 and 14, the one or more teeth 422 may be provided on one or more plates 428 which are arranged at an angle relative to the socket passage 420. The one or more plates 428 may be resiliently deflectable, which allows insertion of a strap 414 through the respective socket passage 420 (by deflecting the respective plate 428). It will be understood that once deflected, the plate 428 will be resiliently urged back to its original position, which will cause the one or more teeth 422 to bite into the strap 414. In the illustrated embodiment, there are two plates 428, and each plate 428 has four teeth 422. But any suitable combination of plates 428 and teeth 422 may be provided. For example, in embodiments with greater or less than two straps 414 and sockets 416, a corresponding number of plates 428 may be provided.

In the illustrated embodiment, the plates 428 are part of an insert 430, as shown in Figure 14. The insert 430 is fitted into a recess 432 in the main body 418 of the male connector 400. In particular, the insert 430 is press-fitted into the recess 432 of the main body 418. In more detail, the recess 432 of the main body 418 has one or more pins 434 and the insert 430 has one or more corresponding apertures 436 which are press-fitted with the one or more pins 434.

In alternative embodiments, the insert 430 is fastened to the main body 418 via one or more fasteners, bonded to the main body 418, or secured via any other suitable means.

As best illustrated in Figure 11, the insert 430 and recess 432 of the main body 418 have a poka-yoke configuration 438 to ensure correct angling of the one or more teeth 422 relative to the socket passage 420. In particular, the poka-yoke configuration 438 is provided by complementary non-symmetrical shapes of the recess 432 and insert 430. For example, in the illustrated embodiment, the insert 430 has an external periphery with a single chamfered corner 438A and the recess 432 has a corresponding internal periphery with a chamfered corner 438B. In this way, the insert 430 can only be fitted into the recess 432 in the correct orientation.

In the illustrated embodiment, the main body 418 of the male connector 400 includes a first part 418A which defines the planar surface 440 and the recess 432 for the insert 430. The main body 418 also includes a second part 418B which defines the one or more sockets 416. The second part 418B of the main body 418B is integrally formed with the one or more straps 414. The first and second parts 418A, 418B may be coupled to each other via any suitable means (e.g., bonded, welded, etc.). In alternative embodiments, the main body 418 may be unitary.

In some embodiments, the female connector 10 includes a tether arrangement 312, 412 of the kind described above. For example, the connector body 12 may have one or more straps and a corresponding one or more sockets of the kind described above.

Although the invention has been described in relation to one or more embodiments, it will be appreciated that various changes or modifications can be made without departing from the scope of the invention as defined in the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A coupling assembly for connecting a tool to a strap or lanyard, the coupling assembly comprising:
a male connector comprising a shaft which extends longitudinally from a first end to a second end;
a female connector comprising a connector body which defines a longitudinal passage for receiving the shaft of the male connector;
an engaging member which is movable between an engaged state in which the engaging member is configured to inhibit disconnection of the male and female connectors, and a disengaged state in which disconnection of the male and female connectors is permitted; and
a blocking member which is movable between a first position in which the blocking member is configured to inhibit actuation of the engaging member, and a second position in which actuation of the engaging member is permitted.

2. The coupling assembly of claim 1, wherein the engaging member and/or blocking member are part of the female connector.

3. The coupling assembly of claim 1 or 2, wherein the engaging member is manually movable from the engaged state to the disengaged state, and wherein the blocking member covers the engaging member in the first position to inhibit actuation of the engaging member and does not cover the engaging member in the second position to permit actuation of the engaging member; and/or wherein the blocking member is biased towards the first position; optionally, wherein the coupling assembly comprises a torsion spring or a compression spring configured to bias the blocking member towards the first position.

4. The coupling assembly of any preceding claim, wherein the blocking member is rotatable between the first and second positions; optionally, wherein the blocking member comprises a sleeve which at least partly surrounds the connector body and which is rotatable between the first and second positions, and wherein the sleeve comprises a recess which is shaped to provide access to the engaging member when the blocking member is in the second position.

5. The coupling assembly of any preceding claim, wherein the blocking member is manually movable to the second position and/or the engaging member is manually movable to the disengaged state; optionally,
wherein the blocking member is configured to be manually pushed (e.g., in a rotational direction) to transition from the first to the second position and/or wherein the engaging member is configured to be manually pushed (e.g., in a transverse direction) to transition from the engaged to the disengaged state; and/or
wherein the coupling assembly is configured and arranged so that the blocking member can be moved to the second position and the engaging member can be moved to the disengaged state with a single human hand; optionally, wherein the blocking member comprises an abutment surface which can be pushed to move the blocking member from the first position to the second position, and wherein the abutment surface is positioned adjacent to the engaging member when the blocking member is in the second position, such that a first part (e.g., an edge) of a human thumb can be used to push the abutment surface to move the blocked member to the second position and a different part (e.g., an underside) of the same thumb can then be used to push the engaging member to the disengaged state.

6. The coupling assembly of any preceding claim, wherein the engaging member is biased towards the engaged state, optionally, wherein the coupling assembly comprises a compression spring or a torsion spring configured to bias the engaging member towards the engaged state.

7. The coupling assembly of any preceding claim, wherein the engaging member is configured to move in a transverse direction relative to the male and/or female connectors to transition between the engaged and disengaged states;
optionally, wherein the engaging member is configured to slide in the transverse direction to transition between the engaged and disengaged states; and/or optionally, wherein the shaft of the male connector comprises an engagement formation between the first and second ends, wherein the engaging member is fixed against longitudinal movement relative to the female connector, wherein the engaging member is configured to engage the engagement formation of the male connector when in the engaged state to inhibit relative longitudinal movement between the male and female connectors; optionally, wherein the engagement formation comprises a groove; and/or optionally, wherein the engagement formation comprises an annular formation; and/or
optionally, wherein the engaging member comprises a first side which can be pushed to move the engaging member from the engaged to the disengaged state, and wherein the engaging member comprises a second side opposite to the first side which is configured to engage the engagement formation when the engaging member is in the engaged state; optionally, wherein the engaging member comprises a ring which extends from the first side to the second side to surround the shaft of the male connector.

8. The coupling assembly of any preceding claim, wherein the engaging member comprises an outer surface having a different appearance to an outer surface of the connector body and blocking member; optionally, wherein the outer surface of the engaging member is a different colour to the outer surface of the connector body and blocking member; optionally, wherein the outer surface of the engaging member is red and the outer surface of the connector body and blocking member are of a different colour (e.g., a neutral colour such as white or black).

9. The coupling assembly of any preceding claim, further comprising a biasing member inside the longitudinal passage of the connector body, wherein when the shaft of the male connector is received within the longitudinal passage the biasing member is configured to urge an end of the shaft in an outboard direction of the longitudinal passage; optionally, wherein the biasing member comprises a coil spring.

10. The coupling assembly of any preceding claim, further comprising a gripping portion arranged adjacent to the blocking member and/or engaging member, such that a user can grip the gripping portion with a lower portion of a hand and move the blocking member and/or engaging member with an upper portion of the same hand; optionally, wherein the gripping portion is part of the female connector; and/or optionally, wherein the gripping portion is a separate component coupled to the connector body or is integrally formed with the connector body; and/or optionally, wherein the connector body comprises a loop for coupling to a strap or lanyard, wherein the gripping portion comprises a recess such that a strap or lanyard can be passed through the recess and coupled to the loop of the connector body.

11. The coupling assembly of any preceding claim, wherein:
the male connector comprises a loop for receiving a strap or lanyard, and/or the female connector comprises a loop for receiving a strap or lanyard; and/or
the male connector is integrally formed with a body of a tool, and/or the female connector is integrally formed with a body of a tool; and/or
the male connector comprises a tether arrangement for tethering the male connector to a tool, and/or the female connector comprises a tether arrangement for tethering the female connector to a tool; optionally, wherein the tether arrangement comprises: one or more straps for wrapping around a tool; and one or more sockets for receiving the one or more straps; wherein each of the one or more sockets is configured to engage the respective strap as it is inserted into the socket, to inhibit movement of the respective strap out of the socket; and/or optionally, wherein the one or more sockets each comprise a socket passage for receiving the respective strap and one or more teeth arranged at an angle to the socket passage, wherein the one or more teeth are arranged to permit insertion of the respective strap through the socket passage in a first direction, and to inhibit removal of the strap from the socket passage in a second direction opposite to the first direction; optionally, wherein the one or more teeth are of harder material than the one or more straps; and/or optionally, wherein the one or more teeth are of metallic material (e.g., steel material); and/or optionally, wherein the one or more straps are of a flexible plastics material (e.g., nylon or other engineered plastic).

12. The coupling assembly of any preceding claim, wherein the shaft of the male connector comprises a tapered free end.

13. A female connector for a coupling assembly for coupling a tool to a strap or lanyard, the female connector comprising:
a connector body which defines a longitudinal passage for receiving a shaft of a male connector;
an engaging member which is moveable between an engaged state in which the engaging member is configured to inhibit disconnection of the female connector and a male connector coupled thereto, and a disengaged state in which the engaging member is configured to permit disconnection of the female connector and a male connector coupled thereto; and
a blocking member which is movable between a first position in which the blocking member is configured to inhibit actuation of the engaging member, and a second position in which actuation of the engaging member is permitted.

14. A male connector assembly for a coupling assembly for coupling a tool to a strap or lanyard, the male connector comprising:
a shaft which extends longitudinally from a first end to a second end for insertion into a longitudinal passage of a female connector; and
a tether arrangement for tethering the male connector to a tool; optionally, wherein the tether arrangement comprises:
one or more straps for wrapping around a tool; and
one or more sockets for receiving the one or more straps;
wherein each of the one or more sockets is configured to engage the respective strap as it is inserted into the socket, to inhibit movement of the respective strap out of the socket.

15. A kit of parts comprising the coupling assembly of any of claims 1 to 12, and/or the female connector of claim 13, and/or the male connector of claim 14, wherein the kit of parts further comprises a strap or lanyard comprising a first end for coupling to the male or female connector, and a second end for coupling to an anchor point.
